Europäisches Patentamt

European Patent Office

Office européen des brevets

(11) Veröffentlichungsnummer: **0 254 206**
**A2**

## (12) EUROPÄISCHE PATENTANMELDUNG

(21) Anmeldenummer: 87110280.2

(22) Anmeldetag: 16.07.87

(51) Int. Cl.4: **E04C 5/00** , E04C 1/34 ,
C04B 20/10

(30) Priorität: 19.07.86 DE 3624447

(43) Veröffentlichungstag der Anmeldung:
27.01.88 Patentblatt 88/04

(84) Benannte Vertragsstaaten:
AT BE CH DE ES FR GB IT LI NL SE

(71) Anmelder: Betomax Kunststoff- und
Metallwarenfabrik GmbH. & Co. KG.
Dyckhofstr. 1
D-4040 Neuss(DE)

(72) Erfinder: Hoff, Walter
Rheinallee 148
D-4000 Düsseldorf 11(DE)
Erfinder: Schütz, Wilhelm, Prof. Dr.-Ing.
Josef-Ponten-Strasse 60
D-5100 Aachen(DE)

(74) Vertreter: Uhlmann, Hans, Dr. rer.nat.,
Dipl.-Chem.
Gladbacher Strasse 189
D-4060 Viersen 1(DE)

(54) In Beton einzubringender Einsatzkörper.

(57) Ein in Beton einzubringender Einsatzkörper besteht aus einem Basiskörper (1) und einer darauf aufgebrachten Beschichtung (2), die durch chemische Bindung mit dem Basiskörper (1) verbunden und/oder mit dem umgebenden Beton (5) verbindbar ist. Vorzugsweise besteht die Beschichtung (2) aus mindestens zwei Schichten (3,4), nämlich einer Basisschicht (3) und einer Verbindungsschicht (4).

Die Erfindung betrifft einen in Beton einzubringenden Einsatzkörper, insbesondere aus Metall oder Kunststoff, wie Abstandhalter, Bewehrungselement, Verwahrungselement, Distanzelement, Spreize, Rohr, Abdeckleiste, Befestigungsteil, Wassersperre und dgl., dessen Basiskörper wenigstens auf einem Teil ihrer Oberfläche mit einer die Verbindung zwischen ihm und dem ihm umgebenden Beton fördernden Beschichtung versehen ist.

Bei der Errichtung von Betonbauten und Betonfertigteilen werden in großem Ausmaß Einsatzkörper aus Metallen, anderen anorganischen und organischen Materialien verwendet, die nach dem Gießen des Betons in diesem verbleiben. Besonders bevorzugt sind Einsatzkörper aus Kunststoff. Diese Einsatzkörper dienen den verschiedensten Zielsetzungen wie der Bewehrung des Betons mit Bewehrungsstählen, Spannzugankern bei Spannbeton, besonders aber bei Betonschalungen als Abstandhalter für Bewehrungen. Die Abstandhalter können dabei unterschiedliche Formen aufweisen, die sich nach dem Ort der Anbringung bzw. dem jeweiligen Anwendungszweck richten. Von besonderem Vorteil sind längliche Abstandhalter, besonders in Form von leistenartigen, nach unten offenen Hohlprofilen, wie sie beispielsweise in dem DE-GM 77 30 442 und dem De-GM 82 24 733 beschrieben sind.

Außer Abstandhaltern gibt es noch zahlreiche andere Körper, die in einer Schalung vor dem Betonieren angebracht werden, z.B. Distanzleisten zum Ausrichten und Ansetzen von Schalungsteilen, Distanzspreizen für ähnliche Zwecke, rohrförmige Elemente, die in Verbindung mit Spannvorrichtungen für Betonschalungen verwendet werden und andere mit dem Aufbau und Zusammenhalt von Schalungsteilen benutzte Elemente, so auch Teile für wasserundurchlässigen Beton.

In der überwiegenden Zahl aller Fälle bestehen solche Teile der unterschiedlichsten Ausbildung, die hier allgemein mit dem Begriff der Einsatzkörper bezeichnet werden sollen, aus Kunststoff. Die Einsatzkörper können aber auch aus anderen Materialien, z.B. aus Metallen, Beton oder Asbest bestehen.

In allen diesen Anwendungsfällen wird ein Problem darin gesehen, daß eine möglichst gute Verbindung zwischen dem betreffenden Einsatzkörper und dem zu gießenden Beton zustandekommt. Schwierigkeiten können sich besonders bei glatten Kunststoffteilen ergeben, aber auch bei aus anderen Werkstoffen hergestellten Einsatzkörpern.

Bei Kunststoff beruht dieses Haftungsproblem vor allem in der meist glatten Oberfläche und darin, daß Kunststoffe mehr oder weniger inert sind und anorganische Materialien schlecht oder gar nicht daran haften. Durch Aufrauhung, Profilierung und ähnliche Maßnahmen läßt sich dieses Problem etwas abmildern, aber nicht in seiner grundsätzlichen Problematik lösen.

Die DE-OS 34 32 346 enthält bereits den Vorschlag, den Verbund zwischen dem Einsatzkörper und dem ihm umgebenden Beton durch eine die Verbindung fördernde Beschichtung zu verbessern. Die dort vorgeschlagene Beschichtung kann Klebstoff oder ein körniges Material wie Sand oder Zementschlempe sein. Es kann auch in zwei Schritten gearbeitet werden und eine zuvor aufgebrachte Klebstoffschicht zur Befestigung des die Verbindung zum Beton fördernden Sandes oder der Zementsschlempe dienen. Durch diese Maßnahmen hat sich bereits eine wesentliche Verbesserung der Verbindung zwischen dem Einsatzkörper und dem ihm umgebenden Verbund erreichen lassen.

Es hat sich aber ergeben, daß diese die Verbindung zwischen Einsatzkörper und Beton fördernde Beschichtung mit Klebstoff und/oder anorganischen Stoffen wie Sand und Zementschlempe noch verbesserungsbedürftig und nicht ausreichend ist, die vielfältigen Probleme zu lösen, die der Verbund zwischen Einsatzkörpern, insbesondere solchen aus Metallen und Kunststoffen mit sich bringt.

Die auftretenden Probleme sind wesentlich differenzierter und komplexer als das reine Haftungsproblem zwischen Einsatzkörper und Beton, wie es sich mit Hilfe der in der DE-OS 34 32 346 aufgezeigten Mittel lösen läßt. Durch diese Mittel wird lediglich eine verbesserte Adhäsion bewirkt.

Bei vielen Einsatzkörpern, insbesondere bei solchen aus Metall und solchen aus Kunststoff, treten außer dem Problem der Haftung zwischen Einsatzkörper und Beton noch Korrosionsprobleme durch Flächenkorrosion, interkristalline Korrosion, z.B. bei niedriglegierten Stählen und transkristalline Spannungsriß-Korrosion, insbesondere bei hochlegierten, geschützten "korrosionsbeständigen" Stählen auf, die infolge Rißbildung im Betonkörper unter Lastfall oder Migration und Diffusion längs der Grenzflächen von durchführenden Einsatzkörpern oder durch andere Arten der Alterung des Betons gegeben sind und denen selbst mit einer ausreichenden Betonbedeckung des Einsatzkörpers nicht begegnet werden kann.

Manche Einsatzkörper, insbesondere stark profilierte Abstandhalter sind außerdem aufgrund ihrer Struktur weniger dicht gegen die Diffusion von $CO_2$, Wasserdampf und anderen Gasen und Dämpfen als der Beton der Betondeckung. Auch sind sie häufig anfällig gegen Mikroben-und Bakterienbefall oder deren Stoffwechselprodukte. Einem ähnlichen schädlichen Einfluß unterliegen die Betoninhaltstoffe.

Durch die Entwicklung beständiger Kunststoffe wie solcher auf Basis Polyurethan, Polyamid, Polyäthylen, Polypropylen, Polyvinylchlorid und Polycarbonat hat sich dieser Einfluß der unzureichend dichten Struktur und der vorzeitigen Alterung des Werkstoffs der Einsatzkörper zwar reduzieren lassen. Es bleiben jedoch zwei Prolemkreise vordringlich und sind ungelöst:

Einerseits entstehen durch mangelnde Haftung zwischen Einsatzkörpern und Beton, insbesondere bei Abstandhaltern, an der Grenzfläche dieser Körper zum Beton Spalte und andere Defekte, die bis zur Bewehrung reichen können. Diese Spalte können unter Temperatureinfluß und Schwinden außerhalb des Lastfalls ebenso auftreten wie unter dem eigentlichen Lastfall. Ihre Entstehung ist darin begründet, daß der Frischbeton nach dem bisherigen Stand der Technik sich nur unter Ausbildung adhäsiver Oberflächenkräfte und unter Bildung mechanischer Verbindungen mit der Oberfläche der Einsatzkörper verbinden kann.

Diese Spalte erleichtern die Diffusion von Gasen und Dämpfen erheblich, so daß vor allem $CO_2$-Gas unter Umgehung der Betondeckung - schneller in die Schutzschichtbereiche in der Nähe der Bewehrungsstähle vordringt und dort die sogenannte Karbonatisierung der Calziumhydrate des Betons vorzeitig bewirkt.

Dabei ist zu bedenken, daß die Diffusion von $CO_2$-Gas nach dem derzeitigen Stand des Wissens der kritische Vorgang ist, weil durch die Reaktion mit $CO_2$ die als basische Schutzschicht benötigten Calziumhydroxide des Betons in Calziumcarbonate mit neutralem bis sauren Charakter umgewandelt werden. Die damit verbundene Erniedrigung des pH-Wertes von anfänglichen Werten um 13 ist bei Unterschreitung eines kritischen pH-Wertes von 8,4 die wichtigste Ursache für die Einleitung der Korrosion von Stahllegierungen durch in Wasser gelöste Ionen, wie Chlor-, Carbonat-, Sulfid-, aber wahrscheinlich auch Natrium-Ionen.

Auch einige Gase, wie $SO_2$, $H_2S$, $NH_3$, die heute durch die Unweltbelastung der Luft hydratisiert in die Bauwerke eindringen können, oder im Bauwerkstoff aus der Gasform in die wässrige Lösung überführt werden, können ebenfalls korrodierend wirken.

Vor allem löst Schwefelwasserstoff, ähnlich wie die Chloride, die gefährliche transkristalline Spanungsrißkorrosion aus, die auch die Passivschichten angreift und zerstört.

Während diese Korrosionsart selbst die Anwendung teurer hochlegierter Stähle in Frage stellt, ist bei unlegierten Stählen aber auch bei austenitischen CrNi-Stählen, Al-Legierungen, CuZn-Legierungen, Rein-Nickel u. Nickel-Legierungen, ja selbst bei Titan-Werkstoffen mit anderen Formen der elektrochemischen Korrosion, wie abtragender Korrosion, Lochfraßkorrosion, Kontaktkorrosion, insbesondere aber mit der interkristallinen Korrosion bei unbelasteten Einsatzkörpern und der interkristallinen Spannungsrißkorrosion bei unter Spannung stehenden Einsatzkörpern in erhöhtem Maße zu rechnen/

Die genannten Vorgänge sind elektrochemischer Natur. Von besonderer Bedeutung sind Konzentrationsunterschiede in der Phasengrenzfläche und in heterogenen Oberflächenschichten außerdem aber insbesondere Spalte, Poren, sogar die Rauheit der Werkstoffgrenzfläche sowie Dreiphasengrenzlinien zwischen Werkstoff/Medium/Gas oder Werkstoff/Medium/Belag.

Als Belag kommen neben unerwünschten Korrosionsprodukten auch Ablagerungen aller Art in Betracht, die zu Konzentrationsänderungen in der Phasengrenze führen. Diese sind schädlich, wenn sie es zulassen oder sogar fördern, daß durch Thermodiffusion und/oder Elektroosmose ein Stofftransport zur Werkstoffoberfläche entsteht, der elektrophoretische und kolloidchemische Reaktionen sowie Salzfällungen möglich macht. Es besteht deshalb ein dringendes Bedürfnis, einen derartigen Stofftransport wirksam zu unterbinden und korrosionsinaktive Phasengrenzflächen nach ihrer Ausbildung an der Oberfläche des Einsatzkörpers langzeitig zu sichern. Es ist deshalb ein Ziel der Erfindung, derartige Stofftransportsysteme und einen Angriff auf den Einsatzkörper und die Verbindung zum Beton zu unterbinden.

Der andere Problemkreis besteht darin, daß der Verbund zwischen Einsatzkörper und Beton ausreichend sein muß, um die im Lastfall zu erwartenden Biege-, Druck-und Scherbeanspruchungen sicher aufzunehmen und zu übertragen und dies auch zu gewährleisten in einem Temperaturebereich bei - 10 ° bis + 90 °C, dem Betonwerkstoffe überlicherweise unterliegen. Für spezielle, außergewöhnliche Lastfälle soll der Verbund zwischen Einsatzkörper und dem Beton kurzzeitig, d.h. für einige Stunden, sogar Temperaturen bis 250 °C und für noch kürzere Zeiten sogar bis 300 °C standhalten.

Der Erfindung liegt damit die Aufgabe zugrunde, einen Einsatzkörper zu schaffen, bei dem sowohl der Verbund der Beschichtung zum Basiskörper als auch zum Beton, in der der Einsatzkörper später eingebettet ist, weiter verbessert ist. Insbesondere soll die Gefahr der Korrosion, insbesondere der Spannungsrißkorrosion und des Stofftransports unerwünschter Stoffe zum Einsatzkörper verhindert oder zumindest stark zurückgedrängt werden. Dabei soll vor allem auch dessen guter Verbund zum Beton auch bei thermischen Belastungen erhalten bleiben und darüberhinaus ein günstiges Alterungsverhalten unter extremen Bedingungen zeigen.

Diese Aufgabe wird erfindungsgemäß bei einem Einsatzkörper gemäß Oberbegriff des Patentanspruchs dadurch gelöst, daß die Beschichtung des Basiskörpers durch chemische Bindung mit dem Basiskörper verbunden und/oder mit dem umgebenden Beton verbindbar ist.

Vorteilhaft besteht die Beschichtung aus mindestens zwei Schichten, bevorzugt sogar aus mehr als zwei Schichten, weil sich dadurch individuelle Formulierungen für den Schichtenaufbau entwickeln lassen, um die unterschiedlichen Anforderungen an die Verbindung der Basisschicht zum Basiskörper, an die Verbindungsschicht zum Beton und an die Zwischenschicht beispielsweise hinsichtlich der Diffusionshemmung optimal zu erfüllen.

Die Ausbildung chemischer Bindungen zusätzlich zu den physikalischen Bindungen, wie sie bei der bisher üblichen Verklebung eintreten, führt zu so festen und kraftschlüssigen Verbindungen sowohl zur Basis des Einsatzkörpers als auch später zum Beton, daß diese weder durch Biegebelastungen, Schwindungskräfte noch durch Wasserstoffbrückenbildung oder durch Hydrolyse getrennt werden können und damit im Lastfall in der Lage sind, die zu erwartenden Biege-, Druck-und Scherbeanspruchungen aufzunehmen und zu übertragen.

Von besonderem Vorteil ist dabei, daß durch chemische Variation, insbesondere bei dem bevorzugten zwei-und mehrschichtigen Aufbau, der Einsatzkörper nach der Erfindung in seiner Beschichtung ganz auf den betreffenden Einsatzzweck hin. d.h. die auftretenden Belastungen und die von der Basis des Einsatzkörpers her gegebenen Voraussetzungen maßgeschneidert werden kann. Das gilt insbesondere auch dahingehend, daß die oben aufgezeigte Beständigkeit gegenüber Biege-, Druck-und Scherbeanspruchung auch in dem weiten Temperaturbereich erhalten bleibt, dem Betonwerkstoffe normalerweise unterworfen sind, d.h. bei -10 °C bis +90 °C. Für spezielle, außergewöhnliche Lastfälle hält die Verbindung bei Auswahl geeigneter Schichten sogar kurzzeitige Temperaturbelastungen bis 250 °C oder für einige Stunden bis zu 300 °C stand.

In einer weiteren vorteilhaften Ausgestaltung der Erfindung ermöglicht die chemische Bindung mit dem Basiskörper und/oder mit dem diesen umgebenden Beton, daß die Beschichtung bzw. einzelne Schichten davon noch zusätzliche Funktionen erfüllen. Vorteilhaft ist mindestens eine der Schichten als Schutzschicht gegen Korrosion des Einsatzkörpers und/oder des Betons ausgebildet.

Insbesondere bei metallischer Basis des Einsatzkörpers kommt dieser Maßnahme besondere Bedeutung zu. Bei unlegierten, aber auch bei legierten Stählen läßt sich - bevorzugt durch eine basische Schutzschicht - die Oberfläche des Basiskörpers gegen chemische oder elektrochemische Zerstörung schützen, wie sie insbesondere durch in Wasser gelöste Ionen wie Chlor-, Carbonat-und Sulfidionen, wahrscheinlich aber auch Natriumionen erfolgt. Durch die immer stärker werdende Umweltbelastung der Luft durch $SO_2$, $H_2S$, $NO_x$ und $NH_3$ bedrohen diese Gase in hydrolisierter Form in vermehrtem Umfange Bauwerke und leiten die gefürchtete transkristalline und interkristalline Spannungsrißkorrosion aus.

Eine bevorzugte Weiterbildung der Erfindung besteht darin, daß mindestens eine der Schichten weitgehend diffusionsdicht gegenüber Gasen und Dämpfen, insbesondere gegenüber Wasserdampf und $CO_2$ ausgebildet ist und so verhindert, daß diese Gase durch Spalte und Risse in den Schutzschichtbereich beispielsweise von Bewehrungsstählen vordringen und dort zur Carbonatisierung der Calciumhydroxide des Betons führen und damit die basische Schutzschicht zerstören.

In einer bevorzugten Ausführungsform besteht die Basisschicht aus Stoffen, die mit dem Basiskörper kovalente Bindungen einzugehen vermögen, weil diese erheblich fester sind als elektrovalente Bindungen und insbesondere nicht durch Hydrolyse durch das im Beton enthaltene Wasser zerstört werden.

Die dem Beton zugewandte Verbindungsschicht besteht vorteilhaft überwiegend aus anorganischem Material und weist damit eine chemische Verwandschaft zum Beton auf. Besonders bevorzugt sind, wie später noch ausgeführt wird, dem Beton zugewandte Verbindungsschichten, die sowohl organische als auch anorganische Bestandteile enthalten und mit dem Frischbeton chemisch zu reagieren vermögen, d.h. mit diesem abbinden.

Zweckmäßig sind bei dem bevorzugten mehrschichtigen Aufbau der Beschichtung auch die einzelnen Schichten durch chemische Bindung untereinander verbunden, so daß der kraftschlüssige Verbund vom Basiskörper bis zum Beton hin gewährleistet ist.

Für die angestrebte chemische Bindung der einzelnen Schichten zum Basiskörper und/oder zum umgebenden Beton, sowie für die Schichten untereinander bieten sich die verschiedensten anorganischen und organischen Verbindungen und Stoffklassen an. Ganz besonders bevorzugt sind für diesen Zweck die Umsetzungsprodukte der Isocyansäure mit chemischen Verbindungen, die als funktionelle Gruppen Hydroxyl-, Amino-, Nitro-, Sulfo-, Carbonyl-, Carboxyl-, Nitril-, Methoxy-, Epoxid-und/oder Carbonsäureester-Gruppierungen aufweisen. Bekanntlich zeichnet sich die Isocyansäure durch Anlagerungsfähigkeit anderer Verbindungen mit funktionellen Gruppen aus und - schafft damit die Voraussetzungen für eine unwahrscheinliche Vielzahl chemischer Reaktionsmöglichkeiten, von denen die bekannteste und im Sinne der Erfindung besonders geeignete Gruppe die Polyurethane sind, unter denen sich wiederum die Umsetzungsprodukte aus Diisocyanaten mit Polyolen besonders bewährt haben. Diese Gruppe ist auch deshalb so bevorzugt geeignet, weil bei der Bildung von Verbindungen mit mehrfunktionellen Isocyanaten keine sekundären Abspaltungsprodukte auftreten, die die Umwelt belasten oder umgebende Werkstoffe angreifen.

Unter den Polyolen zeichnen sich wiederum die Polyätherpolyole und Polyesterpolyole besonders aus, weil sie den entstehenden Hochpolymeren einen gewünschten Grad der Elastizität verleihen.

Im Sinne der Erfindung wird hier die Umsetzungsfreudigkeit der Isocyansäure-Gruppierungen insbesondere von deren Estern und den Diisocyanatgruppierungen mit anderen funktionellen Gruppen ausgenutzt, und zwar sowohl hinsichtlich der Bindung an den Basiskörper als auch hinsichtlich der Bindung gegenüber dem den Einsatzkörper später umgebenden Beton als auch hinsichtlich der Bindung der Schichten untereinander. Dabei können ohnehin im Basiskörper bzw. dem Beton vorhandene funktionelle Gruppen dienen, andererseits aber können solche Gruppen eigens zu diesem Zweck eingebracht werden. Bei Einsatzkörpern mit einer Basis aus PVC eignen sich hierfür beispielsweise Weichmacheranteile, wie Phthalsäureester bzw. Adipinsäureester oder bei anderen Polymeren darin vorhandene Komponenten mit beispielsweise Methoxy-und Nitrilgruppen. Bei Einsatzkörpern aus Metall, wie Eisen oder Stahl, sind es die Hydroxylgruppen des Eisens, die mit der Isocyanatgruppe Urethanbindungen eingehen.

Eine besonders feste und vorteilhafte Bindung der Beschichtung an den Basiskörper läßt sich dadurch erreichen, daß der Basiskörper chemisch so modifiziert ist, daß durch diese Modifizierung die chemische Reaktion ermöglicht oder die ohnehin gegebene Bindungsmöglichkeit dadurch verbessert wird.

Bei Einsatzkörpern aus PVC läßt sich das vorteilhaft dadurch erreichen, daß das PVC vor dem Extrudieren mit Recyclaten solcher PVC-Sorten modifiziert ist, die Vinyläther, Vinylacetat, Acrylsäureester und/oder Acrylnitril und Weichmacher enthalten und über diese Gruppierungen dann mit der Isocyanatgruppe reagieren.

Bevorzugt geeignet ist als Basiskörper ein solcher aus nachchloriertem PVC und es hat sich als besonders vorteilhaft erwiesen, wenn dabei ein solcher verwendet wird, bei dem die Vernetzungsreaktionen noch nicht vollständig abgelaufen sind. Für den Zweck der Erfindung wird man deshalb die Einsatzkörper möglichst unmittelbar nach deren Herstellung beispielsweise durch Extrudieren mit der erfindungsgemäßen Beschichtung versehen.

In gleicher Weise kommen selbstverständlich als Basis für den Einsatzkörper auch andere Hochpolymere anstelle von PVC in Betracht, soweit das wirtschaftlich vertretbar ist. Auch diesen Polymeren können dann in geeigneter Weise durch Einpolymerisierung funktioneller Gruppen oder Einmischung von Bestandteilen mit funktionellen Gruppen die Reaktionsfähigkeit gegenüber der Isocyanatgruppe geschaffen werden.

Als bevorzugte Polyisocyanate des Polyurethansystems, sowohl für die Basisschicht als auch die Verbindungsschicht zum Beton, kommen insbesondere Diisocyanate, wie Polymethylenpolyphenyldiisocyanat, Diphenylmethan 4,4'-Diisocyanat, Naphthylen-1,5-diisocyanat, Hexymethylen-1,6-diisocyanat, Isophorondiisocyanat, Toluylendiisocyanat, hydriertes Diphenylmethandiisocyanat u.ä. auch in Abmischungen untereinander in Betracht. Dabei liegt der besondere Vorteil dieser Isocyanate darin, daß sie passend zur besonderen Aufgabe der auszubildenden Schicht ausgewählt und abgemischt werden können und keine Reaktionsprodukte freisetzen wie bei anderen Fremdvernetzern oder wie bei eigenvernetzenden Systemen. So werden mit Polymethylenpolyphenyldiisocyanat besonders wärmebeständige Polyurethanschichten erhalten. Die Anwendung hydrierter Diphenylmethandiisocyanate umgesetzt mit Carbonsäure modifizierten hochvernetzten Polyesterpolyolen, die zusätzlich mit höhere Fettsäuren modifiziert sein können, führt dagegen zu besonders wasserdampfdichten, hart-elastischen Polyurethanschichten. Aus der Reaktion von Naphthylen-1,5-diisocyanat mit speziellen Polyätherpolyolen bilden sich thermisch und hydrolytisch besonders beständige Polyurethanschichten aus. Eine weitere Variationsbreite und Vielgestaltigkeit der Eigenschaften der Polyurethanschichten ergibt sich durch die Vielzahl der zur Verfügung stehenden Polyolkomponenten, unter denen sich die mehrwertigen Alkohole, wie Trimethylpropan, Glyzerin, Pentaerythrit, Sorbit u.ä. besonders auszeichnen, weil sie polyfunktionell sind und zu einem hohen vernetzungsgrad führen und damit den Aufbau besonders alkalibeständiger und hydrolytisch fester Polyurethanschichten ermöglichen.

Aus der Gruppe der Polyurethane sind besonders bevorzugt spezielle, vollständig substituierte Polyurethane, die keine Wasserstoffbrücken bilden, weil sich damit Schichten ausbilden lassen, die die Ausbildung von Wasserstoffbrückenbindungen erschweren oder unmöglich machen und dadurch das Eindringen von Wasser in die Grenzschicht zwischen Basiskörper und Basisschicht verhindern. Dieses spezielle Polyurethan ist außerdem bei thermischen Belastungen stabil und schmilzt ohne thermischen Abbau seiner Struktur.

Durch den vorzugsweisen Einsatz eines aliphatisch-cycloaliphatischen Polyurethans, vorzugsweise in wässriger Dispersion, läßt sich eine ähnliche Verbesserung der thermischen Eigenschaften der erfindungsgemäßen Beschichtung erreichen. Bis 180 °C findet keine Reaktion statt, sondern nur ein Erweichen. Ab 220 °C tritt stärkeres Erweichen auf und erst bei Temperaturen zwischen 250 und 350 °C tritt Schmelzen ein, aber ebenfalls nur unter geringfügigem thermischen Abbau. Als Gase entstehen nur $CO_2$ und Wasserdampf, also keine giftigen Gase. Nur bei Sauerstoffüberschuß tritt Verbrennung ein, aber auch dabei ohne Rauchentwicklung. Es entsteht ein poröses, stabiles Carbongerüst, ähnlich einem Schaumstoff mit entsprechend niedriger Wärmeleitfähigkeit, so daß sich eine gute Abschirmwirkung ergibt.

Besonders geeignet sind ihrer Difunktionalität und ihrer Reaktionsfreude wegen auch Diepoxide.

Die Polyurethane als solche lassen sich durch Einbau weiterer hochpolymerer Stoffe in ihren Eigenschaften je nach dem Anforderungsprofil weiter modifizieren, wobei sich besonders Alkydharze, der Einbau von Methacrylsäure bzw. die Abmischung mit Harzen auf Basis von Acryl-bzw. Methacrylsäure und der Einbau von Epoxidharzen besonders bewährt haben. Auf diese Art und Weise werden besonders hochvernetzte wasserdampfdichte Sperrschichten aufgebaut und eine Hydrolyse der Verbindung von Beschichtung zum Basiskörper vermieden.

Eine besonders vorteilhafte Ausgestaltung der Beschichtung liegt darin, die Polyolkomponente des Beschichtungssystems mit Silanolen und/oder Siloxanolen durch Kettenverlängerung, Copolymerisation oder Vernetzung zu modifizieren, vorteilhaft auch unter Einkondensation von Polyalkoholen und Polycarbonsäuren, so daß sich aus den Diisocyanaten Siloxan-Urethane bilden. Die Schichten mit diesem Aufbau zeichnen sich durch besondere thermische Beständigkeit aus, die in die Nähe der von Silikonen kommt. Diese Stoffgruppe hat weiter den Vorteil, daß statt der sonst notwendigen und üblichen Heißhärtung durch thermische Vernetzung bei Reaktionstemperaturen von 200 bis 250 °C im Vakuum der Weg der Kalthärtung benutzt werden kann.

In Erkenntnis der Tatsache, daß für eine unzureichende Einbindung in den Beton, insbesondere im Verlauf längerer Zeiträume und der während dieser Zeit ganz unterschiedlichen auftretenden thermischen Beanspruchungen, die unterschiedliche Ausdehnung zwischen dem Basiskörper, der Beschichtung und dem umgebenden Beton eine der wesentlichen Störfaktoren ist, werden in einer bevorzugten Ausgestaltung der Erfindung die Beschichtung oder der Basiskörper oder beide durch Füllstoffe modifiziert, die die unterschiedliche Ausdehnung zwischen dem Basiskörper und der Beschichtung, insbesondere aber später auch zum umgebenden Beton auszugleichen vermögen. Besonders bewährt haben sich dabei Füllstoffe mit einem Wärmeausdehnungskoeffizienten in der Größenordnung von $\beta < 10^{-6} \cdot k^{-1}$, insbesondere Quarzpulver und Glas. Diese Zusätze haben den Vorteil, daß sie bei Beschichtungen auf Basis organischer Stoffe die thermische Beständigkeit insbesondere bei Bränden ganz erheblich verbessern.

Um diese Füllstoffe in die Beschichtung und/oder den Basiskörper gut einzubinden, werden diese vorzugsweise mit Hilfe von Silanen über in diesen enthaltene siliziumfunktionelle und/oder organofunktionelle Gruppierungen an die Beschichtung und/oder den Basiskörper gebunden.

Bei einer Beschichtung auf Basis von Polyurethanen bzw. von mit Epoxidharzen modifizierten Polyurethanen finden zum gleichen Zweck Aminoalkoxylane und/oder Organoalkoxylane wie $\gamma$-Aminopropyltriätheroxysilan Verwendung. Bei Acryl-bzw. Methacrylsäure oder mit Alkydharzen modifizierten Beschichtungen hat sich Methacryloxypropyl-triäthoxysilan wegen seiner chemischen Verwandtschaft zu diesen Modifizierungsmitteln besonders bewährt. Bei Basiskörpern aus PVC finden bevorzugt Siloxane Verwendung, die Vinylgruppen enthalten.

Bei einem Basiskörper aus Metall ist vorzugsweise eine solche Basisschicht aufgebracht, die nicht nur die erforderliche chemische Bindung bewirkt, sondern zusätzlich weitere Funktionen übernimmt, bevorzugt hinsichtlich einer inhibierenden Wirkung. Diese inhibierende Wirkung läßt sich dabei zweckmäßig durch einen hohen pH-Wert der Basisschicht und/oder aufgrund der elektrochemischen Wirkung von Inhaltsstoffen erreichen. Der optimal geeignete Aufbau der Schicht hängt dabei wesentlich von der Art des Metalls ab.

Bei einem Basiskörper aus einem Eisenmetall enthält die Basisschicht bevorzugt siliziumhaltige Verbindungen, die im wesentlichen Kieselsäure enthalten bzw. bilden. Diese wirkt inhibierend gegenüber neutralen wässrigen Medien. Wahrscheinlich beruht diese Schutzwirkung darin, daß wässrige Lösungen der Silikate hohe pH-Werte im Bereich von 11,8 bis 12,7 aufweisen und sich mit einwandernden Alkalihydroxiden zu Alkalihydroxysilikaten umsetzen und so zu einer vorteilhaften Schutzschicht führen, die einen hohen pH-Wert in der Nähe des Einsatzkörpers gewährleistet. Ein weiterer Aspekt der freien Kieselsäure sind ihre guten bindenden Eigenschaften gegenüber vielen weiteren anorganischen Oxiden, Carbiden, Silikaten, die vorteilhaft dieser Schicht aus Gründen des Korrosionsschutzes zugeschlagen werden. Andererseits sind diese Alkalihydroxysilikate hervorragend geeignet, um sich mit weiteren Schichten vorzugsweise solchen auf Basis von unverseifbaren Isocyanatverbindungen umzusetzen.

Die Ausbildung dieser inhibierenden Schutzsicht aus siliziumhaltigen Verbindungen erfolgt bevorzugt über Kieselsäureester wie Äthoxysilane, insbesondere auch in Form technischer Äthylsilikate, die zweckmäßig aus wässrigen Lösungen mit alkoholischen Komponenten im Tauch-, Streichoder Sprühverfahren aufgebracht werden und wobei in einer Reaktions-oder Trocknungsphase die hydrolytische Spaltung der Si-O-C-bindung zu freier Kieselsäure erfolgt, zweckmäßig unter Beschleunigung durch basische Zusätze.

Besondere Bedeutung kommt einer solchen siliziumhaltigen Basisschicht bei kupferlegierten Baustählen zu. Um deren Korrosionsbeständigkeit zu erhalten, hat sich eine Basisschicht besonders bewährt, die eine Mischung von edlen und unedlen Metallen bzw. deren Verbindungen enthält. Durch den Gehalt an edlen und unedlen Metallen in der Basisschicht kupferlegierter Stähle wird erreicht, daß die Durchlässigkeit schädlicher Atmosphärilien wie $SO_2$, $SH_2$, $NH_3$ und anderen verhindert wird, indem basische Sulfate, Hydroxide, Carbonate, Phophate, Silikate ausgebildet werden. Diese verstopfen Poren und Hohlräume und verhindern so den Zutritt weiterer Störstoffe zum Basiskörper.

Zur Präparierung des Basiskörpers insbesondere für den Auftrag weiterer Schichten hat sich eine Basisschicht aus einem Gemisch von Nickel, Chrom, Bor und Silizium besonders bewährt, die bevorzugt im Flammspritzverfahren auf den Basiskörper aufgebracht wird.

Bei Basiskörpern aus verzinktem Baustahl bzw. Zinklegierungen läßt sich eine entsprechende Wirkung durch die zweckmäßige Mitverwendung elektrochemisch neutralisierender Füllstoffe in der Basisschicht erreichen, wofür sich Zinkstaub, basisches Zinkcarbonat, Zinktetrachromat, Aluminiumpulver, Titandioxid, Eisenoxid neben anderen besonders bewährt haben.

In ganz ähnlicher Weise wie die Basisschicht läßt sich bei mehrschichtigem Aufbau der Beschichtung auch die Verbindungsschicht zum umgebenden Beton dahingehend beeinflussen, daß beim Einlagern des Einsatzkörpers nach der Erfindung die Einbindung in den Beton verbessert wird. Das geschieht bevorzugt dadurch, daß die Verbindungsschicht aus dem Umsetzungsprodukt der Isocyansäure mit anorganischen und/oder organischen Hochpolymeren modifiziert ist, die mehrere fraktionelle Gruppen aufweisen, insbesondere solche, die mit im Beton ohnehin vorhandenen bzw. diesem zugegebenen Inhaltsstoffen zu reagieren vermögen. Als besonders geeignet erwiesen haben sich hierfür Umsetzungsprodukte der Isocyansäure mit Wasserglas und/oder Tonerdezement. Ganz bevorzugt sind Verbindungsschichten mit hohem Anteil an gelförmigem Calciumhydroxid, die eine Doppelfunktion erfüllen. Einmal reagiert Calciumhydroxid bei siliziumhaltigen Basisschichten vorteilhaft zu Calciumhydroxysilikat, d.h. zu Kieselsäuregelen ähnlich denen der bekannten Zementinhaltstoffe, die aufgrund ihrer hydraulischen Eigenschaften abbinden. Zum anderen kann die Verbindungsschicht später bei der Einlagerung der Einsatzkörper in Beton mit den Zementinhaltstoffen des Frischbetons reagieren und diesen gegenüber abbinden, so daß sich eine feste Verbindung sowohl zum Basiskörper als auch zum umgebenden Beton ergibt.

Eine weitere bevorzugte Variante der Erfindung besteht in einer Beschichtung bzw. Verbindungsschicht aus Polyurethanen, die blockierte Isocyansäuregruppen enthält. Damit ist u.a. der Vorteil verbunden, daß die Kristallisationswärme beim Abbinden des Betons oder eine andere Wärmebehandlung zur Abspaltung des Blockiermittels benutzt und die so freigewordenen Isocyansäuregruppen für die Umsetzung mit den Zementinhaltstoffen verfügbar gemacht werden können. Auf diese Art und Weise ergibt sich eine hohe Scherfestigkeit der eingelagerten Einsatzkörper zum Beton.

Als Verfahren zur Ausbildung der Beschichtung, bzw. der einzelnen Schichten bei mehrschichtigem Aufbau, kommen die üblichen Auftragsverfahren wie Aufsprühen, das Tauchverfahren und das Aufstreichen in Betracht. Die Stärke der Beschichtung bzw. der Einzelschichten ist stark abhängig von der Ausgestaltung des Basiskörpers, seinem Verwendungszweck und von den Anforderungen, die an die einzelnen Schichten gestellt werden. Sie liegt bei der Gesamtbeschichtung im Mittel zwischen 1 und 3 mm, bei den Einzelschichten zwischen 0,5 und 1 mm.

Ein bevorzugtes Auftragsverfahren bei Beschichtungen aus einem Zwei-oder Mehrkomponentensystem mit mehrfunktionellen Diisocyanaten und Polyolen und/oder anderen Hydroxy-Alkylverbindungen besteht darin, daß das Zwei-oder Mehrkomponentensystem erst beim Auftragen der Schicht gebildet wird und sich so eine besonders feste Verbindung zum Basiskörper oder zu anderen Schichten ausbildet. Dies Verfahren ist auch deshalb so vorteilhaft, weil es die Möglichkeit bietet, die weitere Schicht bzw. die weiteren Schichten in bevorzugter Weise auf die noch nicht vollständig verfestigte Basisschicht aufzutragen und damit eine besonders feste chemische Bindung zwischen beiden Schichten und an den Basiskörper zu bewirken.

Vorteilhaft werden zumindest die Verbindungsschichten zum Beton aus wässrigen Dispersionen aufgetragen. Das hat einmal den Vorteil, daß keine Umweltprobleme auftreten, vor allem aber, daß das Wasser der Dispersion für das Abbinden des Zements genutzt und so in einfacher Weise und ohne Energieaufwand die Ausbildung der betreffenden Schicht erfolgt.

Dieser Effekt wird noch verstärkt, wenn in einem weiteren zweckmäßigen Verfahren zur Ausbildung der Schichten, insbesondere der dem Beton zugewandten Verbindungsschicht Zement zugegeben und dieser nur teilweise abgebunden wird. Diese Zugabe fördert aber nicht nur obigen Effekt, sondern hat den ganz besonderen Vorteil, daß der noch nicht vollständig abgebundene Zement für die Herstellung einer festen chemischen Bindung zum Beton zur Verfügung steht.

Die angestrebte chemische Bindung zum Basiskörper und der Schichten untereinander läßt sich vorzugsweise durch thermische Vernetzung oder energiereiche Strahlung herstellen oder verbessern.

Bei weiteren zweckmäßigen Verfahren kann dabei die chemische Bindung zum Basiskörper bzw. der Schichten untereinander sowohl durch Eigenvernetzung als auch durch Fremdvernetzung der Inhaltstoffe der einzelnen Schichten bewirkt werden.

Für die Ausbildung einer Basisschicht bei verhältnismäßig glatten, glasartigen Oberflächen, wie sie beispielsweise tantalhaltige Metallkörper aufweisen, besteht ein bevorzugtes Verfahren darin, eine Basisschicht aus Nickel, Chrom, Bor und Silizium mit Hilfe organischer und anorganischer Polymerer aus der Wirbelschicht aufzutragen und thermisch zu fixieren und so eine Basis für den Auftrag weiterer Schichten und deren feste Verankerung an den Basiskörper über diese Basisschicht zu schaffen.

Die Erfindung wird nachfolgend an einigen bevorzugten, aber keinesfalls die Erfindung darauf beschränkenden, Beispielen näher erläutert und in der schematischen Skizze ist das Prinzip des Aufbaus eines solchen Einsatzkörpers nach der Erfindung am einfachen Beispiel eines Bewehrungsstabes im Längsschnitt dargestellt:

Auf dem Basiskörper (1) befindet sich eine Beschichtung (2), die aus der Basisschicht (3) und der Verbindungsschicht (4) besteht, über die im eingelagerten Zustand die Verbindung zum umgebenden Beton (5) hergestellt ist. Bei dem Basiskörper (1) kann es sich u.a. um den Schnitt durch die Wand eines Abstandshalters aus Kunststoff oder um einen Bewehrungsstab aus Eisenmetall handeln. Mit gestrichelten Linien (6) ist angedeutet, daß es sich auch um einen rohrförmigen Einsatzkörper handeln kann.

## Beispiel 1

Extrudierte Basiskörper aus recycliertem PVC in Form einer Leiste mit U-Profil werden im Streichverfahren mit einer wässrigen Dispersion eines aliphatisch-cycloaliphatischen Polyurethans auf Basis eines Polyätherpolyols und einer Abmischung aus Hexamethylendiisocyanat und Isophoron-diisocyanat beschichtet. Anschließend wird in einer Wirbelschicht Zementpulver, daß mit Chlorionen versetzt ist oder reines Portlandzementpulver in einer Abmischung mit Tonerdezement im Durchlaufverfahren kontinuierlich aufgetragen. Während der durch Ionen-und/oder Energiezufuhr ausgelösten Koagulation der Polyurethanteilchen, die an der Oberfläche des Basiskörpers einen Film bilden, entstehen Verbindungen von diesen mit dem Basiskörper und es wird Wasser freigesetzt, das mit einem Teil des Zementpulvers zu gelförmigem Calziumhydroxid umgesetzt wird. Die gebildete Verbindungsschicht, die Zementstein enthält, reagiert später über ihre reaktionsfähigen Zementinhaltstoffe mit dem Frischbeton.

## Beispiel 2

Es wird wie in Beispiel 1 verfahren, jedoch werden der wässringen Polyurethan-Dispersion in Abmischungen von 1:5 Anteile einer wässringen Polyurethan-Dispersion zugesetzt, die Präpolymere mit verkappten mehrfunktionellen Isocyanaten enthält. Als Verbindungsschicht werden im kontinuierlichen Wirbelschichtverfahren Zement und/oder Zementabmischungen mit hydraulischen Zuschlagstoffen aufgetragen. In einer thermischen Nachbehandlung werden die Blockierungsmittel der blockierten Polyisocyanate abgespalten und Vernetzungsreaktionen mit der Basis und den Zementinhaltsstoffen und zwischen den Polyisocyanaten ausgelöst.

Beispiel 3

Extrudierte Basiskörper aus recycliertem PVC, das Komponenten mit reaktiven Gruppen in Form von Weichmachern enthält, werden im Tauch-oder Streichverfahren mit einem Zwei-Komponentenpolyurethansystem, bestehend aus einem hochmolekularem Polyätherpolyol und einer Abmischung aus einem aromatischen, aliphatischen und cycloaliphatischen mehrfunktionellen Isocyanat, gelöst in Aceton, beschichtet.

Noch vor der endgültigen Aushärtung der sich daraus bildenden Basisschicht, die mit dem Substrat über die NCO-Gruppen der Isocyanate chemisch reagiert, wird im Streichverfahren mindestens eine weitere Polyurethanschicht aus einer wässrigen Polyurethandispersion auf der Basis von Polyäther-und/oder Polyesterpolyolen mit aliphatischen Diisocyanaten aufgebracht, deren Koagulation wie in Beispiel 1 durch Jonen oder thermische Energie ausgelöst wird. Die Verbindung der Schichten erfolgt durch Verschmelzung der beiden Schichten untereinander und chemische Reaktion unter Bildung von Harnstoffmolekeln.

Wie in Beispiel 1 erfolgt nach Aufbringung der letzten Zwischenschicht eine Nachbehandlung mit Zement oder Zementinhaltstoffen oder einer Zementabmischung mit hydraulischen Zuschlagstoffen zur Bildung einer Verbindungsschicht, die im wesentlichen aus Zementsteinen mit gelförmiger Struktur besteht.

Beispiel 4

. Basiskörper aus Metallen mit amorpher glasartiger Oberflächenstruktur werden nach sorgfältiger Reinigung und Entfettung im Streich-oder Tauchverfahren mit γ-Aminopropyltriethoxysilan als Silanhaftvermittler vorbehandelt. Anschließend wird eine Basisschicht aus einem Lösungspolymerisat eines Polyurethan-Systems, das epoxyfunktionelle Siliziumverbindungen als Copolymere eines Polyols neben Acrylharzlösungen mit N-methylolether-und Hydroxyethylverbindungen und Polymethacrylaten enthält, aufgetragen. Die Schichtbildung erfolgt in situ auf dem Basiskörper durch Fremd-und Eigenvernetzung, wobei durch die Zugabe der Methacrylverbindungen die Abbindezeit und die Härte der Schicht gesteuert wird. Noch vor Abschluß der Reaktion wird eine weitere Zwischenschicht aus einem Lösungspolymerisat, aufgebaut aus einer Abmischung eines Addukts eines mehrfunktionellen Isocyanats und einem Diisocyanat und einem hochvernetzten Polyesterpolyol auf der Basis von Adipin-und Isophthalsäureaddukten mit höheren Alkoholen wie Hexandiol, Trimethylolpropan und Pentaerythrit aufgetragen, die sich mit der Vorschicht chemisch verbindet und selbst durch ihren hohen Vernetzungsgrad als Diffusionswiderstandsschicht gegen Wasserdampf und $CO_2$-Gas fungiert. Sie ist nach ihrer Aushörtung außerdem sehr temperatur-und alterungsbeständig und nicht quellbar.

Vor ihrer endgültigen Abreaktion, die durch Katalysatoren wie Dibutylzinndilaurat o.ä. beschleunigt werden kann, wird eine Abmischung aus wässrigen Polyurethan-und Methacrylharzdispersionen auf der Basis von Polymethacrylaten aufgetragen und anschließend im Wirbelschichtverfahren mit Portlandzement oder einem Zementgemisch mit anorganischen hydraulischen Stoffen appliziert, das wie im Beispiel 1 den Aufbau der Verbindungsschicht bewirkt.

Ein anschließender Trocknungsprozeß unterstützt die innerhalb und zwischen den Schichten sowie zum Basiskörper noch verlaufenden Bindungs-und Vernetzungsreaktionen.

Beispiel 5

Auf einen Basiskörper aus unlegiertem Stahl wird nach dem Flammspritzverfahren auf den Basiskörper eine Schutzschicht aus einem Nickel-, Chrom-, Bor-, Silizium-Gemisch aufgebracht. Die weitere Behandlung erfolgt wie in Beispiel 4. In gleicher Weise ist dieses Beispiel für Basiskörper aus kupferlegiertem Stahl geeignet.

Beispiel 6

Auf einen Basiskörper aus legiertem Stahl wird im Tauchverfahren Kieselsäureester in Form einer wässrigen Lösung von Polyorganosiloxanen des Äthanols aufgebracht. Das präparierte Werkstück wird anschließend in einem Wirbelbett mit einer Pulvermischung aus Nickel, Chrom, Bor, Silizium beschichtet und thermisch nachbehandelt.

Die dabei in der Basisschicht entstehende Kieselsäure ist frei von Alkali und wirkt inhibierend gegenüber neutralen wässrigen Medien.

Die weitere Behandlung erfolgt wie in Beispiel 4 oder in einer Variante dieses Verfahrens, bei der zuerst eine Schicht aus einem reaktiven Zwei-Komponenten-System aufgebracht wird, das aus vollständig substituierten Polyurethan-Präpolymeren -z.B. aus Polyolbischloroformiat und Diaminen -entweder alleine oder in Abmischung mit einer fremdvernetzenden Polymethacrylatverbindung und aliphatischen Diisocyanaten zu Polyurethanen mit Hartsegmenten ohne Wasserstoffbrücken umgesetzt wird.

Abschließend wird in einer weiteren Variante auf diese noch nicht ausreagierte Zwischenschicht eine weitere Schicht aus modifizierten Äthylsilikaten und Polyolen in wässriger Lösung aufgetragen und durch basische Zuschläge, vermischt mit Zementinhaltstoffen, verseift. Die restliche Spaltung der Si-OC-Bindungen erfolgt beim Einbetten in den Frischbeton unter Ausbildung freier Kieselsäure als Bindemittel zum Beton.

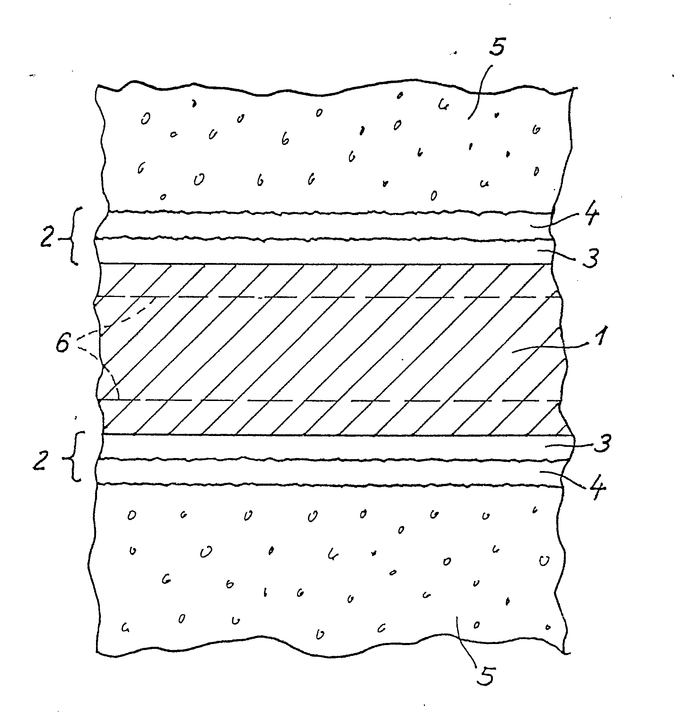

## Ansprüche

1. In Beton einzubringender Einsatzkörper, insbesondere aus Metall oder Kunststoff, wie Abstandhalter, Bewehrungselement, Verwahrungselement, Distanzelement, Spreize, Rohr, Abdeckleiste, Befestigungsteil, Wassersperre, dessen Basiskörper wenigstens auf einem Teil seiner Oberfläche mit einer die Verbindung zwischen ihm und dem ihn umgebenden Beton fördernden Beschichtung versehen ist, dadurch gekennzeichnet, daß die Beschichtung (2) des Basiskörpers (1) durch chemische Bindung mit dem Basiskörper (1) verbunden und/oder mit dem umgebenden Beton (5) verbindbar ist.

2. Einsatzkörper nach Anspruch 1, dadurch gekennzeichnet, daß die Beschichtung (2) des Basiskörpers (1) aus mindestens zwei Schichten (3,4) besteht, nämlich einer Basisschicht (3) und einer Verbindungsschicht (4).

3. Einsatzkörper nach einem der Ansprüche 1 bis 2, dadurch gekennzeichnet, daß die Basisschicht (3) aus Stoffen besteht, die mit dem Basiskörper (1) kovalente chemische Bindungen einzugehen vermögen, und die Verbindungsschicht (4) aus Stoffen besteht, die mit dem Beton (5) chemisch abzubinden vermögen.

4. Einsatzkörper nach einem der Ansprüche 1 bis 3, dadurch gekennzeichnet, daß die Basisschicht (3) und die Verbindungsschicht (4) und evtl. weitere Zwischenschichten durch chemische Bindung untereinander verbunden sind.

5. Einsatzkörper nach einem der Ansprüche 1 bis 4, dadurch gekennzeichnet, daß mindestens eine der Schichten (3,4) im wesentlichen aus dem Umsetzungsprodukt der Isocyansäure mit chemischen Verbindungen gebildet ist, die als funktionelle Gruppen Hydroxyl-, Amino-, Nitro-, Sulfo-, Carbonyl-, Carboxyl-, Nitril-, Methoxy-, Epoxidund/oder Carbonsäureester-Gruppierungen aufweisen.

6. Einsatzkörper nach einem der Ansprüche 1 bis 5, dadurch gekennzeichnet, daß mindestens eine der Schichten (3,4) im wesentlichen aus Polyurethanen gebildet ist.

7. Einsatzkörper nach einem der Ansprüche 1 bis 6, dadurch gekennzeichnet, daß mindestens eine der Schichten (3,4) aus Polyurethanen gebildet ist, die das Umsetzungsprodukt von mehrfunktionellen Isocyanaten mit Polyolen sind.

8. Einsatzkörper nach einem der Ansprüche 1 bis 7, dadurch gekennzeichnet, daß die Polyurethane das Umsetzungsprodukt von Diisocyanaten mit Polyätherpolyolen und/oder Polyesterpolyolen sind.

9. Einsatzkörper nach einem der Ansprüche 1 bis 8, dadurch gekennzeichnet, daß mindestens eine der Schichten (3,4), insbesondere die Verbindungsschicht (4) aus Umsetzungsprodukten der Isocyansäure gebildet wird, die mit anorganischen und/oder organischen Hochpolymeren modifiziert sind, die mehrere funktionelle Gruppen enthalten.

10. Einsatzkörper nach einem der Ansprüche 1 bis 9, dadurch gekennzeichnet, daß die mindestens eine der Schichten (3,4), insbesondere die Verbindungsschicht (4) aus Umsetzungsprodukten der Isocyansäure gebildet wird, die mit Wasserglas und/oder Tonerdezement gebildet sind.

11. Einsatzkörper nach einem der Ansprüche 1 bis 10, dadurch gekennzeichnet, daß die Verbindungsschicht (4) Zement mit hohem Anteil an gelförmigem Calciumhydroxid enthält.

12. Einsatzkörper nach einem der Ansprüche 1 bis 11, dadurch gekennzeichnet, daß die Umsetzungsprodukte der Isocyansäure durch Silanole und/oder Siloxanole, insbesondere Äthylsilikate modifiziert sind.

13. Einsatzkörper nach einem der Ansprüche 1 bis 12, dadurch gekennzeichnet, daß die Beschichtung (2) und/oder der Basiskörper (1) durch Füllstoffe mit einem Wärmeausdehnungskoeffizient $\beta < 10^{-5}.K^{-1}$ modifiziert sind, die die unterschiedliche Ausdehnung zwischen dem Basiskörper (1) und der Beschichtung (2) auszugleichen vermögen.

14. Einsatzkörper nach einem der Ansprüche 1 bis 13, dadurch gekennzeichnet, daß mindestens eine der Schichten (3,4), insbesondere die dem Beton (5) zugewandte Verbindungsschicht (4) aus Polyurethanen mit blockierten Isocyanatgruppen besteht oder diese enthält.

15. Einsatzkörper nach einem der Ansprüche 1 bis 14, dadurch gekennzeichnet, daß der Basiskörper (1) chemisch so modifiziert ist, daß die chemische Bindung mit der Beschichtung (2) ermöglicht oder verbessert wird.

16. Einsatzkörper nach einem der Ansprüche 1 bis 15, dadurch gekennzeichnet, daß bei einem Basiskörper (1) aus Metall der Basisschicht Stoffe zugegeben sind, die inhibierend auf den Basiskörper wirken.